Europäisches Patentamt

European Patent Office

Office européen des brevets

(11) Veröffentlichungsnummer: **0 460 349 A2**

# (12) EUROPÄISCHE PATENTANMELDUNG

(21) Anmeldenummer: **91100568.4**

(22) Anmeldetag: **18.01.91**

(51) Int. Cl.5: **G01K 7/02**, G01K 7/16

(30) Priorität: **05.06.90 DE 4017968**

(43) Veröffentlichungstag der Anmeldung:
**11.12.91 Patentblatt 91/50**

(84) Benannte Vertragsstaaten:
**AT DE FR GB IT NL SE**

(71) Anmelder: **Heraeus Sensor GmbH**
**Heraeusstrasse 12-14**
**W-6450 Hanau am Main(DE)**

(72) Erfinder: **Wienand, Karlheinz, Dr.**
**Mudweg 4**
**W-8750 Aschaffenburg(DE)**

(74) Vertreter: **Grimm, Ekkehard**
**Zentralbereich Patente u. Lizenzen,**
**Heraeusstrasse 12-14**
**W-6450 Hanau/Main(DE)**

(54) **Temperatur-Sensor mit einer in einem Metallmantel angeordneten mineralisolierten Zuleitung.**

(57) Ein Temperatur-Sensor befindet sich im Mantel mit vorgegebenem Ausdehnungskoeffizienten im Bereich von (12,5 bis 17) x $10^{-6}$/K einer mineralisolierten Zuleitung, die im Bereich einer Übergangsstelle mit einer elektrischen Anschlußleitung elektrisch und mechanisch fest verbunden ist. Als Abdichtung des der Anschlußleitung zugekehrten Endes der mineralisolierten Zuleitung dient ein Pfropfen aus einem erschmolzenen, stabilen Bleiboratglas mit einem Ausdehnungskoeffizienten von etwa 12 x $10^{-6}$/K.

EP 0 460 349 A2

Die Erfindung betrifft einen Temperatur-Sensor mit einer in einem Metallmantel, dessen Ausdehnungskoeffizient im Bereich von (12,5 bis 17 x $10^{-6}$/K liegt, angeordneten mineralisolierten Zuleitung und mit einer Übergangsstelle von der Zuleitung zu einer elektrischen Anschlußleitung, wobei das Ende des Metallmantels abgedichtet ist.

Aus der DE-OS 33 28 674 ist eine elektrische Verbindung zwischen den Enden zweier mit Mantel versehener mineralisolierter Leiter bekannt, wobei die Enden der Leiterdrähte vom pulverförmigen Isoliermaterial befreit werden und gegenläufig in eine durchgehende Bohrung eines muffenförmigen Isolierkörpers eingeführt und dort miteinander verlötet oder verschweißt werden. Anschließend werden die Mantel enden durch Löten oder Schweißen am Mantelrand gasdicht miteinander verbunden.

Eine solche Verbindung ist nur für die Verbindung zwischen mineralisolierten Mantelleitern einsetzbar, da die Übergangsstelle nach dem Verbindungsvorgang durch Verschweißen abgedichtet wird und somit kein Isolationsmaterial austreten kann. Als problematisch erweist sich dagegen die Verbindung zwischen einem mineralisolierten Mantelleiter und einer üblichen Anschlußleitung, da hier die Leiterquerschnitte in der Regel nicht übereinstimmen und der kreis- bzw. ringförmige Querschnitt des Isoliermaterials des Mantelleiters im Bereich der Übergangsstelle zur Anschlußleitung nicht abgedichtet werden kann. In der Praxis wird zum Zweck der Abdichtung auf das Mantelleiterende eine Hülse aufgeschoben, welche nach ihrer Sickung mit geeignetem Kunststoffmaterial ausgegossen wird, um das außerordentlich hygroskopische Isoliermaterial des Mantelleiters (Keramikpulver) gegen Feuchtigkeit zu schützen.

Die Erfindung stellt sich die Aufgabe, das Anschlußende eines mineralisolierten Mantelleiters im Bereich der Übergangsstelle zu einer Anschlußleitung hermetisch abzudichten, wobei auch die am anderen Ende des Mantelleiters im Bereich des Temperatur-Sensors auftretende Wärme praktisch keine Auswirkungen auf die Abdichtung im Bereich der Übergangsstelle haben soll.

Die Aufgabe wird erfindungsgemäß durch die kennzeichnenden Merkmale des Anspruchs 1 gelöst.

Vorteilhafte Ausgestaltungen des Gegenstandes der Erfindung sind in den Unteransprüchen angegeben.

In einer bevorzugten Ausführungsform besteht die Leitung des mineralisolierten Leiters aus Kupfer oder einer hochkupferhaltigen Legierung, wobei die Zuleitung im Bereich des Pfropfens eine Oberfläche aus Nickel oder aus einer Nickelbasislegierung aufweist. Die Übergangsstelle zwischen der Zuleitung und der Anschlußleitung ist mit Kunststoff belegt. Die Kunststoffabdeckung kann dabei aufgespritzt oder aufgeschoben sein. In einer bevorzugten Ausführungsform ist die Übergangsstelle mit einer als Kunststoffspritzgußteil ausgebildeten Übergangshülse abgedeckt, welche die Aufgabe der Zugentlastung zwischen dem Mantelleiter und der Anschlußleitung übernimmt.

Als vorteilhaft erweist es sich, daß die Dichtigkeit bei Temperaturschocks, Feuchtigkeitsanlagerungen oder Dampfdrucktests erhalten bleibt und ein sofortiger Isolationsverlust durch Wasseraufnahme den Verlust an Dichtigkeit anzeigen würde. Weiterhin ist die erfindungsgemäße Glasdurchführung für Temperaturen bis zu 300° C geeignet. Die Abdichtung mittels Glaslot läßt sich auch in einer weitgehend automatischen Fertigung ohne Probleme einsetzen.

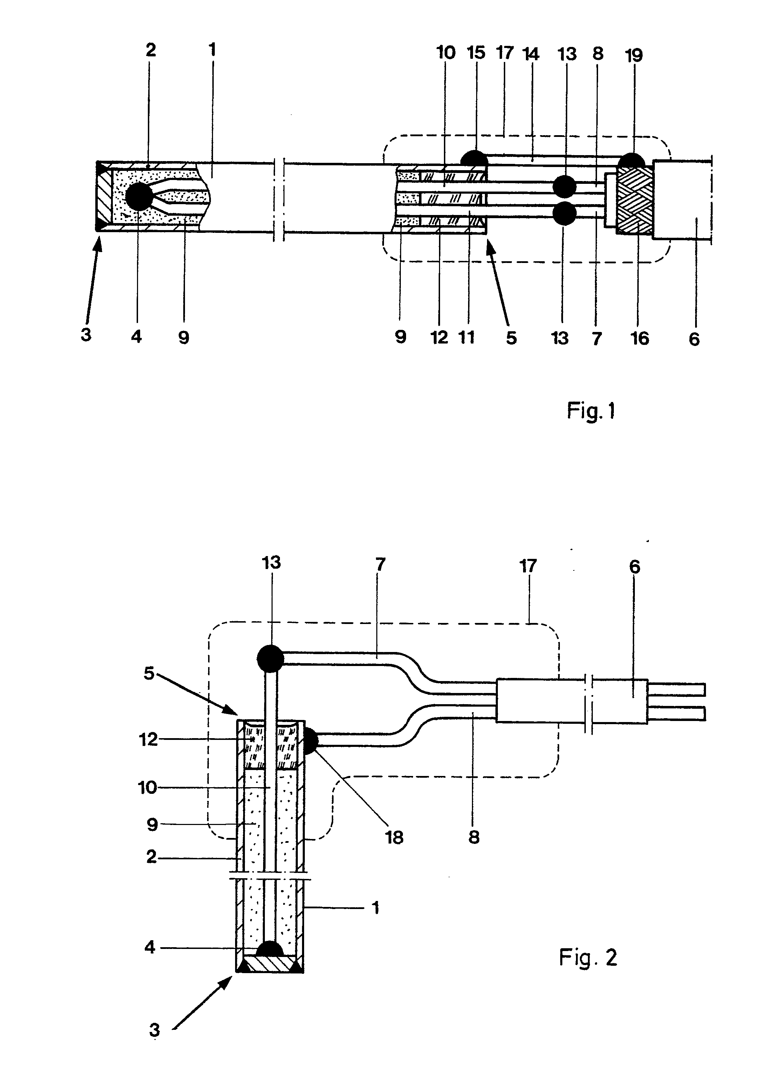

Im folgenden ist der Gegenstand anhand der Figuren 1 und 2 näher erläutert.

Figur 1    zeigt im Längsschnitt eine mineralisolierte Mantelleitung mit einer Übergangsstelle zu einer Anschlußleitung, wobei beide Leitungen näherungsweise in der gleichen Richtung verlaufen,

Figur 2    zeigt schematisch eine rechtwinklig zur Mantelleitung angeordnete Anschlußleitung.

Gemäß Figur 1 befindet sich an einem geschlossenen Ende 3 einer mit Metall-Mantel 2 versehenen mineralisolierten Leitung 1 ein Temperatur-Sensor 4, während sich am anderen offenen Ende 5 der zwecks besserer Übersicht bruchstückhaft dargestellten Leitung 1 die Übergangsstelle zu einer aus zwei zueinander parallel geführten Leitungen 7, 8 bestehenden Anschlußleitung 6 befindet. Zur Ableitung des vom Temperatur-Sensor 4 erzeugten Temperatursignales dienen die gegenüber dem Mantel 2 durch mineralisolierendes Pulver 9 elektrisch isolierten Zuleitungen 10 11. Im Bereich der Übergangsstelle sind die Zuleitungen 10, 11 aus dem Bereich des mineralisolierenden Pulvers 9 herausgeführt und von einem Pfropfen 12 umgeben, welcher aus erschmolzenem Glaslot besteht, das nach seiner Erstarrung den Bereich zwischen Metallmantel 2 und Zuleitungen 10, 11 hermetisch abdichtet. Die aus dem Pfropfen 12 herausragenden Zuleitungen 10, 11 sind über Löt- oder Schweißverbindungen 13 mit je einem Leiter 7 und 8 der Anschlußleitung 6 elektrisch und mechanisch fest verbunden.

Weiterhin ist der Metallmantel 2 ebenfalls mittels Verbindungsleitung 14 über eine Löt- oder Schweißverbindung 15 im äußeren Randbereich des Endes 5 der mineralisolierten Leitung 1 mit einer Mantelabschirmung 16 der Anschlußleitung 6 durch eine weitere Löt- oder Schweißverbindung 19 elektrisch und mechanisch fest verbunden.

Die Übergangsstelle ist zwecks Zugentlastung zwischen mineralisolierter Leitung 1 und Anschlußleitung 6 mit einer Kunststoffumhüllung 17 versehen, welche beispielsweise als Kunststoffspritzteil ausgeführt sein kann. Es ist jedoch auch möglich, die Kunststoffumhüllung 17 direkt auf die Übergangsstelle als Kunststoffteil aufzuspritzen.

Als Material für den Mantel 2 der mineralisolierten Leitung 1 ist beispielsweise ein V-Stahl geeignet, wobei der Temperatursensor 4 beispielsweise als Thermopaar mit verschweißtem Knoten der Zuleitungen 10, 11 ausgebildet sein kann, welches durch das Pulver 9 gegen den Mantel 2 isoliert ist. Als mineralisolierendes Pulver 9 wird Magnesiumoxid, in besonderen Fällen Aluminiumoxid, eingesetzt. Die Zuleitungen 10, 11 bestehen entweder aus Eisen, Nickel, Platin, Rhodium, Kupfer, einer Nickel/Chrom- oder Kupfer/Nickel-Legierung. Im Falle des Einsatzes von Zuleitungen aus Kupfer oder aus einer hochkupferhaltigen Legierung sind die Zuleitungen 10, 11 im Bereich des Pfropfens 12 mit einer Oberfläche aus Nickel oder aus einer Nickelbasislegierung versehen, um die Dichtigkeit im Bereich der Zuleitung zu gewährleisten. Der Pfropfen 12 besteht aus einem als Glaslot dienenden Bleiboratglas, welches einen Ausdehnungskoeffizienten von etwa $12 \times 10^{-6}$/K aufweist, wobei das Glaslot eine Dichte von etwa 6,75 g/cm$^3$ besitzt.

Es ist selbstverständlich möglich, anstelle der oben beschriebenen Thermoelemente auch Widerstandsthermometer oder piezoelektrische Resonatoren als Temperatur-Sensoren einzusetzen. Als Material für die Kunststoff-Umhüllung hat sich insbesondere durch Glasfaser verstärktes Poliamid oder ein thermoplastischer Fluorkunststoff, wie beispielsweise PFA oder FEP, bewährt.

Figur 2 zeigt eine Ausführungsform, in der der Metall-Mantel 2 die Funktion einer der beiden Zuleitungen, wie sie anhand der Figur 1 erläutert sind, übernimmt. Gemäß Figur 2 ragt aus dem Mantel 2 der mineralisolierten Leitung 1 die Zuleitung 10 aus dem mit Pfropfen 12 abgedichteten Bereich zwischen Mantel 2 und Zuleitung 10 heraus. Zuleitung 10 ist über eine Löt- oder Schweißverbindung 13 mit dem ersten Leiter 7 der Anschlußleitung 6 verbunden, während der Mantel 2 der mineralisolierten Leitung 1 in seinem oberen Randbereich durch eine Löt- oder Schweißverbindung 18 mit dem zweiten Leiter 8 der Anschlußleitung 6 verbunden ist. Anschlußleitung 6 und mineralisolierte Leitung 1 bilden somit ungefähr einen rechten Winkel. Zur Abdeckung der Übergangsstelle ist eine Kunststoff-Umhüllung 17 vorgesehen, welche als Kunststoffspritzteil ausgebildet ist oder durch Aufspritzen auf die Verbindungsstelle aufgebracht wird und somit eine zusätzliche Dichtung der Löt- oder Schweißverbindungen ermöglicht.

**Patentansprüche**

1. Temperatur-Sensor mit einer in einem Metallmantel, dessen Ausdehnungskoeffizient im Bereich von (12,5 bis 17) $\times 10^{-6}$/K liegt, angeordneten mineralisolierten Zuleitung und mit einer Übergangsstelle von der Zuleitung zu einer elektrischen Anschlußleitung, wobei das Ende des Metallmantels abgedichtet ist, dadurch gekennzeichnet, daß als Abdichtung ein Pfropfen (12) aus einem erschmolzenen, stabilen Bleiboratglas mit einem Ausdehnungskoeffizienten von etwa $12 \times 10^{-6}$/K dient, das eine Dichte von etwa 6,75 g/cm$^3$ besitzt.

2. Temperatur-Sensor nach Anspruch 1, dadurch gekennzeichnet, daß wenigstens für den Fall einer Zuleitung (10, 11) aus Kupfer oder aus einer hochkupferhaltigen Legierung die Zuleitung (10, 11) im Bereich des Pfropfens (12) eine Oberfläche aus Nickel oder aus einer Nickelbasis-Legierung aufweist.

3. Temperatur-Sensor nach Anspruch 1 oder 2, dadurch gekennzeichnet, daß die Übergangsstelle mit einer Kunststoff-Umhüllung (17) abgedeckt ist.

4. Temperatur-Sensor nach Anspruch 3, dadurch gekennzeichnet, daß die Kunststoff-Umhüllung (17) aufgespritzt ist.

Fig. 1

Fig. 2